(19) Europäisches Patentamt
European Patent Office
Office européen des brevets

(11) Veröffentlichungsnummer: **0 269 943 B1**

(12) # EUROPÄISCHE PATENTSCHRIFT

(45) Veröffentlichungstag der Patentschrift: **26.01.94**

(51) Int. Cl.$^5$: **C08G 18/22**, C08G 18/70, C08G 18/79, C08G 18/32

(21) Anmeldenummer: **87116915.7**

(22) Anmeldetag: **17.11.87**

Die Akte enthält technische Angaben, die nach dem Eingang der Anmeldung eingereicht wurden und die nicht in dieser Patentschrift enthalten sind.

(54) **Verfahren zur Herstellung von Uretdionringen enthaltenden Polyurethanen.**

(30) Priorität: **29.11.86 DE 3640855**

(43) Veröffentlichungstag der Anmeldung:
**08.06.88 Patentblatt 88/23**

(45) Bekanntmachung des Hinweises auf die Patenterteilung:
**26.01.94 Patentblatt 94/04**

(84) Benannte Vertragsstaaten:
**BE DE FR GB IT NL**

(56) Entgegenhaltungen:
**EP-A- 0 150 790**
**EP-A- 0 196 163**
**FR-A- 2 450 847**

(73) Patentinhaber: **BAYER AG**

**D-51368 Leverkusen(DE)**

(72) Erfinder: **Grögler, Gerhard, Dr.**
**von-Diergardt-Strasse 48**
**D-5090 Leverkusen 1(DE)**
Erfinder: **Hess, Heinrich, Dr.**
**Körnerstrasse 5**
**D-5090 Leverkusen 1(DE)**
Erfinder: **Kopp, Richard, Dr.**
**Bilharzstrasse 15**
**D-5000 Köln 80(DE)**

EP 0 269 943 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft Verfahren zur Herstellung von Polyurethanen durch Umsetzung von Uretdionringe enthaltenden Diisocyanaten und gegebenenfalls weiteren Diisocyanaten mit organischen höhermolekularen Dihydroxy-Verbindungen mit einem Molekulargewicht von 500 bis 10.000 und gegebenenfalls niedermolekularen Diolen als Kettenverlängerer, vorzugsweise mit einem Molekulargewicht von 62 bis 400, in Gegenwart von Katalysatoren, wobei als Katalysatoren Wismutsalze organischer Carbonsäuren in Kombination mit der fünf- bis zehnfachen Menge, bezogen an die Wismutsalze, niedermolekularer, armomatischer Diamine mit einem Molekulargewicht von 108 bis 600, verwendet werden.

Es ist bereits bekannt (DE-PS 11 53 900), Uretdiongruppen enthaltene Diisocyanate mit höhermolekularen Polyhydroxyverbindungen und gegebenenfalls difunktionellen Kettenverlängerern zu Polyurethanen umzusetzen. Um aber eine Polyaddition der in der Regel hochschmelzenden und schwerlöslichen uretdiongruppenhaltigen Diisocyanate im befriedigendem Ausmaße zu erhalten, müssen üblicherweise Reaktionstemperaturen über 100 °C angewendet werden, wodurch es leicht zu einer Spaltung der Uretdionringe kommen kann. Da können die zunächst linearen Polyurethane eine weit über das gewünschte Ausmaß herausgehende Vernetzung zeigen.

Durch Mitverwendung von in der Polyurethanchemie gebräuchlichen Katalysatoren wie z.B. organischen Metallsalzen oder tertiären Aminen hat man bereits versucht, die Verfestigungstemperatur bzw. die Verfestigungszeit bei der Aushärtung deutlich zu erniedrigen bzw. zu verkürzen. Aber auch hierbei beobachtet man eine unerwünschte Erhöhung der Vernetzungsdichte, wodurch die mechanischen Eigenschaften des ursprünglich weitgehend linearen Polyurethans erheblich beeinflußt werden. Dies gilt auch für den Einsatz retardiert reagierender fester Uretdiondiisocyanate, wie sie in der DE-OS 3 230 757 zur Herstellung lagerstabiler Mischungen sog. Einkomponentensysteme zur Herstellung von Polyurethanen beschrieben werden. Auch hier kann beim Einsatz organischer Blei- oder Zinnverbindungen als bevorzugte Katalysatoren nicht die Spaltung der Uretdionringe und damit die unerwünschten Nebenreaktionen ausgeschlossen werden.

Ziel der vorliegenden Erfindung war es daher, die bekannten Verfahren zur Herstellung von Polyurethanen unter Einsatz von üblicherweise hochschmelzenden und schwerlöslichen Uretdionringe enthaltenden Diisocyanate soweit zu optimieren, daß sowohl weitgehend eine Rückspaltung in Diisocyanate und eine Spaltung der Uretdionringe unter Biuret- und Allophanatgruppenbildung und damit eine Vernetzung vermieden als auch ein rascher Übergang der Polyadditionsprodukte vom wachsartigen Zustand in den gewünschten elastischen Endzustand erreicht und damit eine möglichst rasche Entformbarkeit und Weiterverarbeitbarkeit der Polyurethane erzielt wird.

Dies wird mit dem erfindungsgemäßen Verfahren erreicht. Gegenstand der vorliegenden Erfindung sind daher Verfahren zur Herstellung von gegebenenfalls geschäumten Polyurethanen durch Umsetzen von organischen Polyisocyanaten die zu mindestens 50 Gew.-% aus Uretdionringe enthaltenden Diisocyanaten bestehen mit organischen Dihydroxyverbindungen mit Molekulargewichten von 500 bis 10.000 und gegebenenfalls nieder mole Kularen Diolen als Kettenverlängerer sowie Hilfs- und Zusatzstoffen in Gegenwart von Katalysatoren, dadurch gekennzeichnet, daß als Katalysatoren Wismutsalze organischer Carbonsäuren in Kombination mit der fünf- bis zehnfachen Menge, bezogen auf die Wismutsalze, niedermolekularer aromatischsher Diamine mit Molekulargewichten von 108 bis 600 verwendet werden.

Der Einsatz von Wismutsalzen als Katalysatoren bei der Herstellung von Polyurethanen unter Einsatz üblicher Diisocyanate ist beschrieben (US-PS 4 584 362). Uretdionringe enthaltende Polyisocyanate werden nicht erwähnt. Versucht man nun, diese Polyisocyanate bzw. deren retardierte Form, die bevorzugt bei der Einstufen-Herstellung von Polyurethanen aus Langzeitsystemen eingesetzt werden, in Gegenwart von Wismutsalzen zu Polyurethanen umzusetzen, so wird zwar die gewünschte kurze Reaktions-bzw. Verfestigungszeit festgestellt, aber die Endprodukte weisen Fehlstellen wie Hohlräume oder sog. "Muschelrisse" auf, wenn das Reaktivsystem der Einwirkung von Luftfeuchtigkeit ausgesetzt wird. Damit ist auch eine deutliche Verminderung der mechanischen Werte verbunden. Überraschenderweise gelingt es nun, durch den Einsatz organischer Wismutsalze in Kombination mit niedermolekularen aromatischen Diaminen nicht nur die gewünschten kurzen Reaktionszeiten mit hohen Umsätzen und die gewünschten kurzen Verfestigungszeiten sondern auch einwandfreie Endprodukte mit herausragenden mechanischen Werten herzustellen.

Als Wismutsalze organischer Carbonsäuren können vorzugsweise Salze organischer Carbonsäuren mit 2 bis 20 C-Atomen eingesetzt werden.

Als sehr wirkungsvoller Bi-Aktivator hat sich Bi-(III)-2-ethylhexanoat erwiesen. Insbesondere geeignet sind diejenigen organischen Bi-Salze, die aus organischen Carbonsäuren der Formel (I)

R-COOH (I)

und anorganischen Bi-Salzen hergestellt werden, wobei der Rest R für ein $C_1$-$C_{20}$-Alkyl, $C_4$-$C_{20}$-Cycloalkyl-, $C_6$-$C_{20}$-Aryl- oder $C_7$-$C_{20}$-Aralkyl-Radikal steht. Vorzugsweise steht der Rest R für Methyl, Octyl, Cyclohexyl, Phenyl, Tolyl oder Naphthyl.

Vorzugsweise werden die organischen Bi-Salze mit einer Menge von 0,01 bis 5 Gew.-%, vorzugsweise von 0,05 bis 2,0 Gew.-%, bezogen auf die Menge der Ausgangskomponenten, eingesetzt.

Nach dem erfindungsgemäßen Verfahren werden die Bi-Aktivatoren in Kombination mit niedermolekularen, aromatischen Diaminen verwendet. Die aromatischen Diamine werden in einer fünf- bis zehnfachen Menge, bezogen auf die Mengen von Bi-Salzen, in die Reaktionsansätze eingebracht. Dabei ist es unerheblich, ob die aromatischen Diamine in flüssiger oder fester Form vorliegen. In letzterem Falle sollte bei Verwendung von Einkomponentensystemen die Teilchengröße jedoch 50 bis 100 $\mu$ nicht überschreiten.

Als Beispiel für die niedermolekularen aromatischen Diamine mit Molekulargewichten von 108 bis 600 seien folgende Verbindungen genannt, wobei unter aromatischen Diaminen auch heteroaromatische Amine verstanden werden.

p-Phenylendiamin, 2,4/2,6-Toluylendiamin, Diphenylmethan-4,4'- und/oder -2,4'- und/oder -2,2'-diamine, 3,3'-Dichlor-4,4'-diaminodiphenylmethan, 3-($C_1$-$C_8$-Alkyl-4,4'-diaminodiphenylmethane, die 3,3'-Di-($C_1$-$C_4$)-4,4'-diaminodiphenylmethane sowie die 3,3',5,5'-Tetra-($C_1$-$C_4$)-alkyl-4,4'-diphenylmethane, die 4,4'-Diaminodiphenyl-sulfide, -sulfoxide oder -sulfone, Ethergruppen aufweisende Diamine gemäß DE-A 1 770 525 und 1 809 172 (US-PS 3 654 364 und 3 736 295), gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$-$C_4$)-Alkylgruppen substituierte Toluylendiamine, Besonders bevorzugt sind 3,5-Diethyl-2,4-und/oder -2,6-diaminotoluol (besonders ihre technischen (80/20) oder (65/35)-Isomerengemische), unsymmetrisch tetraalkylsubstituierte Diaminodiphenylmethane, z.B. 3,5-Diethyl-3'-5'-diisopropyl-4,4'-diaminodiphenylmethan, 4,4'-Diaminobenzanilid, sowie 3,5-Diaminobenzoesäure-($C_1$-$C_4$)-alkylester, 4,4'- und/oder 2,4'-Diaminodiphenylmethan, sowie Naphthylen-1,5-diamin.

Als Uretdionringe enthaltende Diisocyanate (dimere Diisocyanate) können vorzugsweise solche festen Diisocyanate eingesetzt werden, deren Schmelzpunkt oberhalb 40 °C, bevorzugt oberhalb 80 °C, besonders bevorzugt oberhalb 130 °C, liegt und die in der DE-OS 3 403 500 beschrieben sind.

Dies sind z.B. dimeres Toluylen-2,4-diisocyanat, dimeres 4,4'-Diisocyanato-diphenylmethan oder seine oligo-dimeren, linearen Homologen, z.B. mit bis zu 4 Uretdionringen im Molekül, dimeres 2,4'-Diisocyanato-diphenylsulfid, dimeres 4,4'-Diisocyanato-diphenylsulfid, dimeres 4,4'-Diisocyanato-diphenylsulfon, sowie alle anderen bekannten aromatischen Uretdiondiisocyanate und Mischungen aus solchen Uretdiondiisocyanaten. Bevorzugt sind dimeres Toluylen-2,4-diisocyanat und dimeres 2,4'- und/oder 4,4'-Diisocyanto-diphenylmethan.

Die Herstellung der Uretdiondiisocyanate aus den entsprechenden Diisocyanaten ist schon seit langer Zeit bekannt (vgl. Hofmann, Berichte 3 (1870), S. 765-766). Die Herstellung von z.B. dimerem Toluylen-2,4-diisocyanat ist im Kunststoffhandbuch - Band 7, Polyurethane, herausgegeben von Vieweg/Höchtlen, Carl-Hanser-Verlag, München 1966, S. 16 ausführlich beschrieben. Sie gelingt durch Dimerisierung der obengenannten Diisocyanate mit Katalysatoren wie Trialkylphosphiten (DE-OS 2 349 726), peralkylierten Carbamoylphosphiten (US-PS 3 290 288), peralkylierten Aminophosphinen (US-PS 3 290 288), 3- oder 4-substituierten Pyridinen (GB-PS 821 158, 944 309, 962 689) wie z.B. 4-Dimethylaminopyridin, mit Trialkylphosphinen (luftempfindliche, hochreaktive Substanzen, DE-OS 2 420 475), Dialkylarylphosphinen und Alkyldiarylphosphinen (US-PS 2 671 082), Trialkylarsinen (Analytical Chemistry of the Polyurethanes, Bd. 16/III, High-Polymers-Series (Wiley 1969), S. 112-131), Dibutylzinndilaurat (DE-OS 2 420 475) ohne Katalysator in einem Carboxylsäureester (USSR-PS 149 775) oder in wäßriger Emulsion (GB-PS 1 134 285).

Auch die oligomere Uretdiondiisocyanate der allgemeinen Formel (II)

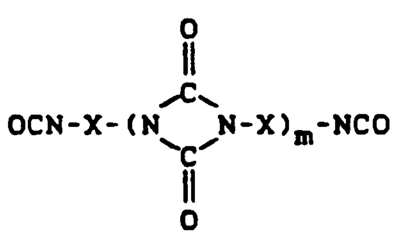

(II),

worin

X für einen aromatischen Rest und

m für eine ganze Zahl von 1 bis 5

steht, können verwendet werden. Bevorzugt ist das Uretdiondiisocyanat aus 4,4'-Diphenylmethan-diisocyanat, welches bevorzugt bei niedrigen Temperaturen (z.B. 20 °C) in wenig polaren Lösungsmitteln wie aliphatischen Kohlenwasserstoffen durch Zusatz von Katalysatoren hergestellt werden kann (m = 1-2).

Neben den Uretdionringe enthaltenden Diisocyanaten können bis höchstens 50 Gew.-%, bezogen auf die Isocyanatmenge, noch weitere Diisocyanate mitverwendet werden wie sie z.B. in der DE-OS 3 230 757 beschrieben sind.

Erfolgt die erfindungsgemäße Polyurethanherstellung unter Einsatz eines sog. Einkomponenten-PU-Reaktivsystem, so werden die zum Einsatz kommenden Diisocyanate vorzugsweise in retardierter Form verwendet, d.h. mit retardierter Reaktivität. Die Herstellung von Diisocyanaten mit retardierter Reaktivität ist Stand der Technik und ist z.B. in der DE-OS 3 230 757 und DE-OS 3 403 500 beschrieben.

Als weitere Ausgangsverbindungen für die erfindungsgemäße Herstellung von Polyurethanen werden höhermolekulare Dihydroxyerbindungen im Molekulargewichtsbereich von 500 bis 10.000, eingesetzt. Entsprechende Verbindungen sind in der DE-OS 3 230 757 beschrieben. Die gegebenenfalls mitverwendeten niedermolekularen Kettenverlängerer sind Diole, vorzugsweise mit Molgewichten zwischen 62 und 400, die an vorzugsweise aliphatischen und/oder cycloaliphatischen Gruppen gebundene Hydroxylgruppen aufweisen. Auch der Einsatz dieser Verbindungen ist bekannt und z.B. in der DE-OS 3 230 737 beschrieben.

Als gegebenenfalls zum Einsatz kommende Hilfs- und Zusatzstoffe seien genannt: Farbstoffe oder Pigmente, Füllstoffe wie Silicagel, Gips, Talkum, Aktivkohle, UV-Absorptionsmittel oder Stabilisatoren wie phenolische Antioxidantien, Lichtschutzmittel, Treibmittel, oberflächenaktive Zusatzstoffe wie Emulgatoren oder Schaumstabilisatoren, gegebenenfalls Zellregler, Antiblockmittel, Silikone, Flammschutzmittel oder fungistatisch und/oder bakteriostatisch wirkende Substanzen.

Die Herstellung der Polyurethane unter Verwendung der erfindungsgemäßen Kombination kann nach allen bekannten Verfahrensweisen, wie Ein- oder Zweikomponentensystemen erfolgen. Dabei ist die Verwendung eines Einkomponenten-PU-Reaktivsystems als Ausgangsmischung bevorzugt.

Solche Einkomponentensysteme können z.B. gemäß DE-OS 3 230 757 hergestellt werden. Hierbei werden die festen Diisocyanate vorzugsweise mit einer Teilchengröße von 5 bis 100 µm und vorzugsweise in retardierter Form mit den höhermolekularen H-aktiven Verbindungen sowie gegebenenfalls niedermolekularen Diolen den organischen Bi-Salz und den niedermolekularen, aromatischen Diaminen und gegebenenfalls anderen Zusatzstoffen gemischt. Zur Herstellung der Polyurethane werden die Systeme vorzugsweise auf Temperaturen von 100 bis 150 °C erhitzt, wobei man innerhalb kürzester Zeit, 1 bis 2 Minuten, ausreichend verfestigte, leicht entformbare Polyurethane bzw. entsprechende Formkörper mit fehlerloser Struktur und sehr guten mechanischen Eigenschaften erhält.

Die Formgebung der Einkomponentensysteme richtet sich nach deren Beschaffenheit. Flüssige, bei 25 °C gießbare Systeme lassen sich im Gießprozeß verarbeiten, gegebenenfalls werden sie vor der Verarbeitung kurz erwärmt, z.B. auf 50 bis 70 °C.

Nicht mehr gießbare, aber noch verlaufende Systeme können z.B. mit einer Rakel auf gewünschte Unterlagen aufgebracht werden und anschließend durch Hitzestoß verfestigt werden.

Plastische Systeme (Pasten) können unter Druck- und Formgebung in der Hitze verpreßt werden.

Feste Systeme, insbesondere auf Basis höherschmelzender Ausgangsdiole (45 bis 65 °C) werden entweder unter Druck und Formgebung (Spritzguß) oder etwa bei oder oberhalb der Schmelztemperatur des Diols verarbeitet. Man kann so verfahren, daß man die vorher hergestellten Einkomponentensysteme in Form fester Granulate in eine über den Schmelzpunkt des Diols aufgewärmte Form (im allgemeinen unterhalb 70 °C) einbringt. Danach wird nach dem Aufschmelzen der Granulate und der damit gegebenen Werkzeugfüllung die Form auf 100 bis 120 °C erwärmt und der Inhalt verfestigt.

Die nach dem erfindungsgemäßen Verfahren hergestellten elastomeren Polyurethane eignen sich insbesondere als Folienmaterial, als Gewebebeschichtung auf z.B. Textilien und/oder Transportbändern und zur Herstellung von Gießformkörpern.

Beispiel 1

1000 g eines bei 25 °C flüssigen linearen Polyesters aus Adipinsäure und Diethylenglykol (OH-Zahl 43) werden bei 100 bis 120 °C im Vakuum gründlich entwässert. Danach werden bei Raumtemperatur 1,5 g 1-Amino-3,3,5-trimethyl-5-aminomethylcyclohexan (IPDA) zugesetzt. Nach weiterer Zugabe von 170 g dimerem 2,4-Diisocyanatotoluol (TT) in Form eines feingemahlenen Pulvers (Teilchengröße; 5 bis 20 µ) wird

mittels eines Rührwerkes für eine gute Verteilung des Uretdiondiisocyanats im Reaktionsansatz gesorgt. Die Suspension besitzt eine Viskosität von ca. 25.000 mPas/RT und ist bei Raumtemperatur mehrere Monate lagerstabil. Erst in der Hitze erfolgt allmähliche Verfestigung, wobei jedoch nur Produkte mit unbefriedigendem Wertniveau erhalten werden. Um eine einwandfreie Verfestigung der Proben bei geringerer Temperatur zu erreichen, werden daher die in der Tabelle 1 angegebenen Katalysatoren den Probeansätzen zugefügt und jeweils ein Satz von Probeansätzen ohne Einwirkung von Luftfeuchtigkeit bzw. nach einer 4 stündiger Einwirkung wie unten dargelegt weiter verarbeitet.

Auf einer auf 120 °C eingestellten elektrischen Heizplatte wurde dann das Verfestigungsbild von 2 bis 3 mm dicken Probekörpern nach einer Temperatureinwirkung von 2 Minuten bestimmt. Als charakteristisches Merkmal wurde dabei die Abhebbarkeit der Plättchen (~5 x 5 cm Fläche) bei klebfreier Oberfläche herangezogen.

Tabelle 1

| Katalysator | Menge (g) | Hitzeeinwirkung (min) | Luftfeuchtigkeit ohne | Luftfeuchtigkeit mit |
|---|---|---|---|---|
| Bi-octoat<br>Diamin* | 0,2<br>1,0 | 2 | klebfreie Oberfläche, gummiartig | klebfreie Oberfläche, gummiartig homogene Struktur |
| Bi-octoat | 0,2 | 2 | " | klebende Oberfläche inhomogene Struktur |
| Diazo-bicyclooctan (Dabco®) | 0,5 | 2 | " | " " |
| Bleioctoat | 0,2 | 2 | " | " " |

* Diamin = 2,4-Diamino-3,5-Diethyltoluol

Aus den erhaltenen Polyurethanen wurden nunmehr nach üblicher Verfahrenstechnik Probeplatten hergestellt. Nach einer Temperung von 2 h bei 120 °C zeigen die entsprechenden PUR-Elastomere hinsichtlich ihres mechanischen Werteniveaus deutliche Unterschiede.

| Katalysator | ohne Luftfeuchtigkeit, entgast | | | | mit Luftfeuchtigkeit |
|---|---|---|---|---|---|
| | Bi-octoat/ Diamin* | Bi-octoat | Dabco® | Pb-octoat | Bi-octoat/Diamin |
| Härte Shore A DIN 53 505 | 82 | 80 | 60 | 62 | 80 |
| Zugfestigkeit (MPa) DIN 53 504 | 22,5 | 19,5 | 2,2 | 2,1 | 20,5 |
| Weiterreiß-festigkeit (KN/m) DIN 53 515 | 800 | 750 | 150 | 100 | 800 |
| Elastizität (%) | 47 | 45 | 35 | 36 | 46 |

Während das mechanische Eigenschaftsniveau der mit Pboctoat und Dabco® hergestellten Elastomere selbst bei Ausschluß von Luftfeuchtigkeit zum Einsatz als Beschichtungsmaterialien unzureichend ist, erhält man mit Bi-octoat Produkte mit verbesserten mechanischen Eigenschaften ohne inhomogene Struktur nur bei Ausschluß von Luftfeuchtigkeit. Produkte mit ausgezeichneten mechanischen Eigenschaften und eine homogene Struktur auch bei Einwirkung von Luftfeuchtigkeit erhält man nur mit der erfindungsgemäßen

Kombination.

Beispiel 2

Mit 150 g gemäß Beispiel 1 hergestellten flüssigen Reaktionsansätzen, die als Aktivatoren 0,15 g Bi-octoat bzw. 0,15 g Bi-octoat und 3 g 2,4-Diamino-3,5-diethyl-toluol enthalten, werden auf Metallbleche (verzinktes Eisenblech) ca. 1 mm dicke Filme aufgetragen und diese ca. 1 h der Luftfeuchtigkeit (85 % rel.) ausgesetzt. Danach wurden die Filme bei 120 °C verfestigt. Es wurde folgendes Verfestigungsbild erhalten.

| Katalysator | Verfestigungsbild |
|---|---|
| Bi-octoat | starke Blasenbildung, Muschelrisse |
| Bi-octoat/Diamin* | einwandfreier, homogener Film |

Beispiel 3

500 g eines linearen Polypropylenglykolethers (MG 2000, OHZ 56) werden mit 151 g dimerem TDI (TT) in Form eines gemahlenen Pulvers vermischt und die entstehende Suspension mittels eines Rührwerkes gut homogenisiert. Danach erfolgt Zusatz von 2,0 g 2,4-Diamino-3,5-diethyltoluol*. Diese Mischung ist bei Raumtemperatur über einige Stunden stabil. Es erfolgt nur langsame Viskositätserhöhung. Bei Einwirkung von Hitze (120 bis 150 °C) tritt jedoch nur unbefriedigende Vernetzung ein und man erhält zum Teil unhomogenes Material, das unter Zug- und Druckbeanspruchung zerstört werden kann. Erst bei Zusatz von 2,0 g einer 50 % Bi-octoat-Lösung (Bi-2-Ethylhexanoat in Waschbenzin) erfolgt unter Hitzeeinwirkung einwandfreie Verfestigung zu einem elastischen Polyurethan.

Zur Herstellung der Probeplatten werden die jeweiligen Reaktionsansätze 2 Stunden bei Raumtemperatur und Luftfeuchtigkeit gelagert und anschließend in eine mit Trennmittel versehene genormte Form gegossen und diese 1/2 bis 1 h bei 120 °C ausgeheizt.

Nach kurzer Lagerzeit beim Raumtemperatur werden die mechanischen Eigenschaften des Elastomeren bestimmt.

| Katalysator | Bi-octoat/Diamin* |
|---|---|
| Härte (Shore A) | 90 |
| Modul (100 %) (MPa) | 7,5 |
| Zugfestigkeit (MPa) | 11,5 |
| Bruchdehnung (%) | 450 |
| Weiterreißfestigkeit (KN/m) | 30,5 |
| Elastizität (%) | 54 |

Beispiel 4

Werden die in Beispiel 3 genannten 500 g Polypropylenglykolether durch 500 g eines linearen Polyoxytetramethylendiols vom Molgewicht 2000 (OHZ 56) ersetzt, so erhält man in Kombination mit 127,8 g TT und unter Verwendung von 1,0 g Bi-octoat und 10 g des genannten Diamins nach einer 2 stündigen Lagerung bei Luftfeuchtigkeit nach der Hitzeverfestigung hochelastische Polyurethane mit folgenden mechanischen Eigenschaften.

Mechanische Werte des Elastomeren

| Katalysatoren | Bi-octoat/Diamin* |
|---|---|
| Härte (Shore A) | 88 |
| Modul (100 %) (MPa) | 5,0 |
| Zugfestigkeit (MPa) | 10,3 |
| Bruchdehnung (%) | 500 |
| Weiterreißfestigkeit (KN/m) | 25,6 |
| Elastizität (%) | 65 |

Beispiel 5

Zu einer Suspension von 650 g eines linearen Dihydroxypolybutadiens vom Molgewicht 2600, 10 g 2,4-Diamino-3,5-diethyl-toluol* und 117,3 g dimerem TDI (TT) werden 1,0 g Bi-octoat zugesetzt. Nach der in Beispiel 3 beschriebenen Verfahrensweise und 2 stündiger Lagerung bei Luftfeuchtigkeit wird der bei Raumtemperatur flüssige Reaktionsansatz in der Hitze verfestigt. Man erhält ebenfalls hochelastische PUR-Formteile mit folgenden mechanischen Eigenschaften.

| | Bi-octoat/Diamin* |
|---|---|
| Härte (Shore A) | 84 |
| Modul (100 %) (MPa) | 5,5 |
| Zugfestigkeit (MPa) | 5,5 |
| Bruchdehnung (%) | 100 |
| Weiterreißfestigkeit (KN/m) | 10,5 |
| Elastizität (%) | 63 |

**Patentansprüche**

**1.** Verfahren zur Herstellung von gegebenenfalls geschäumten Polyurethanen durch Umsetzen von organischen Polyisocyanaten, die zu mindestens 50 Gew.-% aus Uretdionringe enthaltende Diisocyanaten bestehen mit organischen Dihydroxyverbindungen mit Molekulargewichten von 500 bis 10.000 und gegebenenfalls nieder mole Kularen Diolen als Kettenverlängerer sowie Hilfs- und Zusatzstoffen in Gegenwart von Katalysatoren, dadurch gekennzeichnet, daß als Katalysatoren Wismutsalze organischer Carbonsäuren in Kombination mit der fünf- bis zehnfachen Menge, bezogen auf die Wismutsalze, niedermolekularer aromatischer Diamine mit Molekulargewichten von 108 bis 600 verwendet werden.

**2.** Verfahren nach Anspruch 1, dadurch gekennzeichnet, daß Bi-Salze in Mengen von 0,01 bis 5 Gew.-%, vorzugsweise von 0,05 bis 2,0 Gew.-%, bezogen auf die Menge der Ausgangskomponenten, eingesetzt werden.

**3.** Verfahren nach Anspruch 1 oder 2, dadurch gekennzeichnet, daß als Wismutsalze Salze organischer Carbonsäuren mit 2-20 C-Atomen eingesetzt werden.

**4.** Verfahren nach Ansprüchen 1 bis 3, dadurch gekennzeichnet, daß als Wismutsalz Bi-(III)-2-ethylhexanoat verwendet wird.

**5.** Verfahren nach Ansprüchen 1 bis 4, dadurch gekennzeichnet, daß die Diisocyanate in retadierter, fester Form verwendet werden.

**6.** Verfahren nach Ansprüchen 1 bis 5, dadurch gekennzeichnet, daß ein Einkomponenten-PU-Reaktivsystem zur Umsetzung eingesetzt wird.

7. Verfahren nach Ansprüchen 1 bis 6, dadurch gekennzeichnet, daß man als aromatisches Diamin 3,5-Diethyl-2,4- und/oder 2,6-diaminotoluol einsetzt

## Claims

1. A process for the preparation of optionally foamed polyurethanes by the reaction of organic polyisocyanates which consist to an extent of at least 50% by weight of diisocyanates containing uretdione rings with organic dihydroxy compounds having molecular weights of from 500 to 10,000 and optionally low molecular weight diols as chain lengthening agents and auxiliary agents and additives in the presence of catalysts, characterized in that the catalysts used are bismuth salts of organic carboxylic acids in combination with five to ten times the quantity, based on the bismuth salts, of low molecular weight aromatic diamines having molecular weights of from 108 to 600.

2. A process according to Claim 1, characterized in that bismuth salts are used in quantities of from 0.01 to 5% by weight, preferably from 0.05 to 2.0% by weight, based on the quantity of the starting components.

3. A process according to Claim 1 or Claim 2, characterized in that the bismuth salts used are salts of organic carboxylic acids having 2 to 20 carbon atoms.

4. A process according to Claims 1 to 3, characterised in that the bismuth salts used are Bi-(III)-2-ethylhexanoate.

5. A process according to Claims 1 to 4, characterised in that the diisocyanates are used in a retarded, solid form.

6. A process according to Claims 1 to 5, characterised in that a one-component PU reactive system is used for the reaction.

7. A process according to Claims 1 to 6, characterised in that the aromatic diamine used is 3,5-diethyl-2,4- and/or 2,6-diaminotoluene.

## Revendications

1. Procédé de préparation de polyuréthannes éventuellement gonflés en mousse par réaction de polyisocyanates organiques, consistant pour au moins 50% en poids en diisocyanates qui contiennent des cycles uretdione, avec des composés organiques dihydroxylés de poids moléculaire 500 à 10000 et le cas échéant des diols à bas poids moléculaire servant d'agents d'allongement des chaînes, des produits auxiliaires et additifs, en présence de catalyseurs, caractérisé en ce que l'on utilise en tant que catalyseurs des sels de bismuth d'acides organiques carboxyliques en combinaison avec des diamines aromatiques à bas poids moléculaire, de poids moléculaire 108 à 600, en quantité de 5 à 10 fois la quantité des sels de bismuth.

2. Procédé selon la revendication 1, caractérisé en ce que l'on utilise les sels de bismuth en quantité de 0,01 à 5 %, de préférence de 0,05 à 2,0% du poids des composants de départ.

3. Procédé selon la revendication 1 ou 2, caractérisé en ce que les sels de bismuth utilisés sont des sels d'acides organiques carboxyliques en $C_2$-$C_{20}$.

4. Procédé selon les revendications 1 à 3, caractérisé en ce que le sel de bismuth utilisé est le 2-éthylhexanoate de Bi-III.

5. Procédé selon les revendications 1 à 4, caractérisé en ce que l'on utilise les diisocyanates à l'état solide retardé.

6. Procédé selon les revendications 1 à 5, caractérisé en ce que l'on utilise pour la réaction un système réactif à un composant pour préparation d'un polyuréthanne.

**7.** Procédé selon les revendications 1 à 6, caractérisé en ce que la diamine aromatique utilisée est le 3,5-diéthyl-2,4- et/ou -2,6-diaminotoluène.